# EUROPÄISCHE PATENTANMELDUNG

(11) **EP 4 108 695 A1**
(43) Veröffentlichungstag der Anmeldung: **28.12.2022**
(21) Anmeldenummer: 21180676.5
(22) Anmeldetag: 21.06.2021
(51) Int. Cl.: C08G 18/42, C08G 18/62, C08G 18/80, C09D 175/04

(54) **BESCHICHTUNGSMITTEL UND DARAUS ERHÄLTLICHE BESCHICHTUNGEN MIT VERBESSERTEN ANSCHMUTZUNGSRESISTENZEN UND (SELBST-)REINIGUNGSEIGENSCHAFTEN**

(71) Anmelder: Covestro Deutschland AG, 51373 Leverkusen (DE)
(72) Erfinder: WEIKARD, Jan, 51375 Leverkusen (DE); SIEGEMUND, Sven, 51399 Burscheid (DE); PAPADOPOULOU, Elisavet, 53842 Troisdorf (DE); GOLLING, Florian, 40237 Düsseldorf (DE)
(74) Vertreter: Levpat

(57) **Zusammenfassung**

Die Erfindung betrifft 2-komponentige Beschichtungsmittel, enthaltend in einer erste Komponente mindestens ein Silangruppen- und Thiourethan- und/oder Thioallophanat-Gruppen aufweisendes Polyisocyanat und mindestens ein Alkoxysilyl-funktionelles Siloxan, in einer zweiten Komponente mindestens eine Hydroxylgruppen-haltige Verbindung, sowie in Komponente I und/oder II mindestens einen Katalysator für die Vernetzung von Silangruppen. Die Erfindung betrifft außerdem die Herstellung dieser Beschichtungsmittel und die Verwendung zur Herstellung von Beschichtungen auf Substraten, im Besonderen Kunststoffsubstraten, beispielsweise solchen, wie sie in der Automobilindustrie Anwendung finden.

## Beschreibung

Die Erfindung betrifft 2-komponentige Beschichtungsmittel, enthaltend in einer erste Komponente mindestens ein Silangruppen- und Thiourethan- und/oder Thioallophanat-Gruppen aufweisendes Polyisocyanat und mindestens ein Alkoxysilyl-funktionelles Siloxan, in einer zweiten Komponente mindestens eine Hydroxylgruppen-haltige Verbindung, sowie in Komponente I und/oder II mindestens einen Katalysator für die Vernetzung von Silangruppen. Die Erfindung betrifft außerdem die Herstellung dieser Beschichtungsmittel und die Verwendung zur Herstellung von Beschichtungen auf Substraten, im Besonderen Kunststoffsubstraten, beispielsweise solchen, wie sie in der Automobilindustrie Anwendung finden.

Aufgabe der vorliegenden Erfindung war es neue Beschichtungsmittel zur Verfügung zu stellen, die sich durch sehr gute Anschmutzungsresistenzen und (Selbst-)Reinigungseigenschaften auszeichnen sollten und hohe Härtegrade aufweisen sollten.

Diese Aufgabe konnte mit der Bereitstellung der nachfolgend näher beschriebenen erfindungsgemäßen Beschichtungsmittel, welche als Härterkomponente Silangruppen-, sowie Thiourethan- und/oder Thioallophanat-Gruppen aufweisende Polyisocyanate in Abmischung mit Alkoxysilyl-funktionellen Siloxanen enthalten, gelöst werden.

Aus der WO2017/202692 sind Beschichtungsmittel und daraus erhältliche Beschichtungen mit verbesserten Anschmutzungsresistenzen und (Selbst)reinigungseigenschaften bekannt, die unter Verwendung von Aminosilan-funktionalisierten Isocyanaten in Kombination mit Hydroxylgruppenhaltigen Verbindungen und alkoxysilylfunktionellen Siloxanen erhältlich sind. Die Verwendung einer Härterkomponente umfassend eine Mischung aus Silangruppen-, sowie Thiourethan- und/oder Thioallophanat-Gruppen aufweisenden Polyisocyanaten und Alkoxysilyl-funktionellen Siloxanen wird nicht erwähnt oder nahegelegt.

Gegenstand der vorliegenden Erfindung sind zwei-komponentige Beschichtungsmittel aus einer ersten Komponente (I), enthaltend oder bestehend aus
(A) mindestens eine/r Polyisocyanatkomponente, erhältlich durch Umsetzung
   (A1) mindestens eines Polyisocyanats mit
   (A2) mindestens einer gegenüber Isocyanatgruppen reaktiven Verbindung der allgemeinen Formel (I) 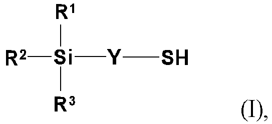 in welcher
      - R¹, R² und R³: für gleiche oder verschiedene Reste stehen und jeweils einen gesättigten oder ungesättigten, linearen oder verzweigten, aliphatischen oder cycloaliphatischen oder einen gegebenenfalls substituierten aromatischen oder araliphatischen Rest mit bis zu 18 Kohlenstoffatomen bedeuten, der gegebenenfalls bis zu 3 Heteroatome aus der Reihe Sauerstoff, Schwefel, Stickstoff enthalten kann,
      - und: Y für einen linearen oder verzweigten organischen Rest mit mindestens 2 Kohlenstoffatomen steht,
(B) mindestens ein/em Alkoxysilyl-funktionelles/en Siloxan der Formel (II)

   R⁴-SiR⁵₂-Aₓ-B_{y}-O-SiR⁶₂-R⁷ (II),

   worin A eine Gruppe -[O-SiR⁸₂]- und B eine Gruppe -[O-SiR⁹R¹⁰]- ist,
   R⁵, R⁶, R⁸ und R⁹ unabhängig voneinander lineare oder verzweigte Alkylgruppen mit 1 bis 4 Kohlenstoffatomen sind,
   R⁴, R⁷ und R¹⁰ unabhängig voneinander eine Gruppe -L-R¹¹ sind, worin
   L = eine lineare oder verzweigte 2-bindige Alkylgruppe und
   R¹¹ = H oder -Si(R¹²)_{z}(OR¹³)_{3-z}mit R¹², R¹³ = eine lineare oder verzweigte Alkylgruppe mit 1 bis 4 Kohlenstoffatomen und z = 0, 1, oder 2, bevorzugt z = 0, ist,
   mit der Vorgabe, das mindestens einer der Reste R⁴ oder R⁷ und/oder mindestens eine Gruppe B eine Gruppe R¹¹ = -Si(R¹²)_{z}(OR¹³)_{3-z} beinhaltet,
   x unabhängig für eine ganze Zahl von 1 -20 steht, und
   y unabhängig für eine ganze Zahl von 0-10 steht,
   wobei bevorzugt x+y ≤ 20 ist,
   und einer zweiten Komponente (II), enthaltend oder bestehend aus
(C) mindestens eine/r Hydroxylgruppen-haltige/n Verbindung, wobei in wenigstens einer der beiden Komponenten I und II mindestens ein Katalysator für die Vernetzung von Silangruppen (D) enthalten ist.

### Polyisocanatkomponente A

### Polyisocyanat A1

Als Ausgansgverbindungen A1 zur Herstellung der Polyisocyanatkomponente A geeignet sind beliebige monomere Diisocyanate mit aliphatisch, cycloaliphatisch, araliphatisch und/oder aromatisch gebundenen Isocyanatgruppen geeignet, die nach beliebigen Verfahren, z. B. durch Phosgenierung oder auf phosgenfreiem Weg, beispielsweise durch Urethanspaltung, hergestellt werden können.

Geeignete monomere Diisocyanate sind beispielsweise solche der allgemeinen Formel (IV)

OCN-Z-NCO (IV),

in welcher Z für einen linearen oder verzweigten, aliphatischen oder cycloaliphatischen Rest mit bis zu 18 Kohlenstoffatomen, bevorzugt 4 bis 18 Kohlenstoffatomen oder einen gegebenenfalls substituierten aromatischen oder araliphatischen Rest mit bis zu 18 Kohlenstoffatomen, bevorzugt 5 bis 18 Kohlenstoffatomen steht, wie z. B. 1,4-Diisocyanatobutan, 1,5-Diisocyanatopentan (PDI), 1,6-Diisocyanatohexan (HDI), 1,5-Diisocyanato-2,2-dimethylpentan, 2,2,4- bzw. 2,4,4-Trimethyl-1,6-diisocyanatohexan, 1,8-Diisocyanatooctan, 1,9-Diisocyanatononan, 1,10-Diisocyanatodecan, 1,3- und 1,4-Diisocyanatocyclohexan, 1,4-Diisocyanato-3,3,5-trimethylcyclohexan, 1,3-Diisocyanato-2-methylcyclohexan, 1,3 -Diisocyanato-4-methylcyclohexan, 1-Isocyanato-3,3,5 -trimethyl-5 - isocyanatomethylcyclohexan (Isophorondiisocyanat; IPDI), 1-Isocyanato-1-methyl-4(3)-isocyanatomethylcyclohexan, 2,4'- und 4,4'-Diisocyanatodicyclohexylmethan (H₁₂-MDI), 1,3- und 1,4-Bis(isocyanatomethyl)cyclohexan, 4,4'-Diisocyanato-3,3'-dimethyldicyclohexylmethan, 4,4' Diisocyanato-3,3',5,5'-tetramethyldicyclohexylmethan, 4,4'-Diisocyanato-1,1'-bi(cyclohexyl), 4,4'-Diisocyanato-3,3'-dimethyl-1,1'-bi(cyclohexyl), 4,4'-Diisocyanato-2,2',5,5'-tetra-methyl-1,1'-bi(cyclohexyl), 1,8-Diisocyanato-p-menthan, 1,3-Diisocyanatoadamantan, 1,3-Dimethyl-5,7-diisocyanatoadamantan, 1,3- und 1,4-Bis-(isocyanatomethyl)benzol, 1,3- und 1,4-Bis(1-isocyanato-1-methylethyl)-benzol (TMXDI), Bis(4-(1-isocyanato-1-methylethyl)phenyl)-carbonat, 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat und Naphthylen-1,5-diisocyanat sowie beliebige Gemische solcher Diisocyanate. Weitere ebenfalls geeignete Diisocyanate finden sich darüberhinaus beispielsweise in Justus Liebigs Annalen der Chemie Band 562 (1949) S. 75 - 136.

Besonders bevorzugt sind monomere Diisocyanate der allgemeinen Formel (IV), in welcher Z für einen linearen oder verzweigten, aliphatischen oder cycloaliphatischen Rest mit 5 bis 13 Kohlenstoffatomen steht.

Ganz besonders bevorzugte monomere Diisocyanate zur Herstellung der Polyisocyanatkomponente A sind 1,5-Diisocyanaotpentan, 1,6-Diisocyanatohexan, 1-Isocyanato-3,3,5-trimethyl-5-isocyanatomethylcyclohexan, 2,4'- und/oder 4,4'-Diisocyanatodicyclohexylmethan oder beliebige Gemische dieser Diisocyanate.

Als Ausgansgverbindungen A1 zur Herstellung der Polyisocyanatkomponente A geeignet sind, neben den oben genannten monomeren Diisocyanaten, auch beliebige durch Modifizierung von monomeren aliphatischen, cycloaliphatischen, araliphatischen und/oder aromatischen Diisocyanaten erhältliche oligomere Di- und Polyisocyanate mit Uretdion-, Isocyanurat-, Urethan-, Allophanat-, Thiourethan-, Thioallophanat-, Biuret-, Harnstoff-, Iminooxadiazindion- und/oder Oxadiazintrionstruktur oder beliebige Gemische dieser oligomeren Di- und Polyisocyanate. Die Herstellung dieser oligomeren Verbindungen erfolgt nach an sich bekannten Methoden zur Isocyanatoligomerisierung, wie sie beispielsweise in J. Prakt. Chem. 336 (1994) 185 - 200, in DE-A 1 670 666, DE-A 1 954 093, DE-A 2 414 413, DE-A 2 452 532, DE-A 2 641 380, DE-A 3 700 209, DE-A 3 900 053 und DE-A 3 928 503 oder in EP-A 0 336 205, EP-A 0 339 396 und EP-A 0 798 299 sowie in DE-A 870 400, DE-A 953 012, DE-A 1 090 196, EP-A 0 546 399, CN 105218780, CN 103881050, CN 101717571, US 3 183 112, EP-A 0 416 338, EP-A 0 751 163, EP-A 1 378 529, EP-A 1 378 530, EP-A 2 174 967, JP 63260915 und JP 56059828 beispielhaft beschrieben sind. Als monomere Diisocyanate können beispielsweise die zuvor aufgelisteten Diisocyanate eingesetzt werden. Es gelten die dort genannten Vorzugsbereiche.

### Gegenüber Isocyanatgruppen reaktive (kurz auch Isocyanat-reaktive) Verbindungen A2

Geeignete Ausgangsverbindungen A2 zur Herstellung der Polyisocyanatkomponente A sind Mercaptosilane der allgemeinen Formel (I) 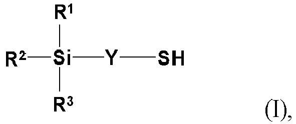 in welcher
- R¹, R² und R³: für gleiche oder verschiedene Reste stehen und jeweils einen gesättigten oder ungesättigten, linearen oder verzweigten, aliphatischen oder cycloaliphatischen oder einen gegebenenfalls substituierten aromatischen oder araliphatischen Rest mit bis zu 18 Kohlenstoffatomen bedeuten, der gegebenenfalls bis zu 3 Heteroatome aus der Reihe Sauerstoff, Schwefel, Stickstoff enthalten kann, und
- Y: für einen linearen oder verzweigten organischen Rest mit mindestens 2 Kohlenstoffatomen steht.

Geeignete Mercaptosilane A2 sind beispielsweise 2-Mercaptoethyltrimethylsilan, 2-Mercaptoethylmethyldimethoxysilan, 2-Mercaptoethyltrimethoxysilan, 2-Mercaptoethyltriethoxysilan, 3-Mercaptopropylmethyldimethoxysilan, 3-Mercaptopropyldimethylmethoxysilan, 3-Mercaptopropyltrimethoxysilan, 3-Mercaptopropylmethyldiethoxysilan, 3-Mercaptopropyltriethoxysilan, 3-Mercaptopropylethyldimethoxysilan, 3-Mercaptopropylethyldiethoxysilan und/oder 4-Mercaptobutyltrimethoxysilan.

Bevorzugte Mercaptosilane A2 für das erfindungsgemäße Verfahren sind solche der allgemeinen Formel (I), in welcher
- R¹, R² und R³: für gleiche oder verschiedene Reste stehen und jeweils einen gesättigten, linearen oder verzweigten, aliphatischen oder cycloaliphatischen Rest mit bis zu 6 Kohlenstoffatomen bedeuten, der gegebenenfalls bis zu 3 Sauerstoffatome enthalten kann, und
- Y: für einen linearen oder verzweigten Alkylenrest mit 2 bis 10 Kohlenstoffatomen steht.

Besonders bevorzugte Mercaptosilane A2 sind solche der allgemeinen Formel (I), in welcher
- R¹, R² und R³: jeweils Alkylreste mit bis zu 6 Kohlenstoffatomen und/oder Alkoxyreste, die bis zu 3 Sauerstoffatomen enthalten, bedeuten, mit der Maßgabe, dass mindestens einer der Reste R¹, R² und R³ für einen solchen Alkoxyrest steht, und
- Y: für einen Propylenrest (-CH₂-CH₂-CH₂-) steht.

Ganz besonders bevorzugte Mercaptosilane A2 sind solche der allgemeinen Formel (I), in welcher
- R¹, R² und R³: für gleiche oder verschiedene Reste stehen und jeweils Methyl, Methoxy oder Ethoxy bedeuten, mit der Maßgabe, dass mindestens einer der Reste R¹, R² und R³ für einen Methoxy- oder Ethoxyrest steht, und
- Y: für einen Propylenrest (-CH₂-CH₂-CH₂-) steht,

insbesondere 3-Mercaptopropyltrimethoxysilan und/oder 3-Mercaptopropyltriethoxysilan.

Zur Herstellung der Polyisocyanatkomponente A werden die Polyisocyanate A1 mit den Isocyanat-reaktiven Verbindungen A2 bei Temperaturen von 20 bis 200 °C, vorzugsweise 30 bis 160 °C umgesetzt.

Die Herstellung erfolgt bevorzugt unter Einhaltung eines Äquivalentverhältnisses von Isocyanatgruppen zu gegenüber Isocyanaten reaktiven Gruppen von 50 : 1 bis 1,05 : 1, vorzugsweise von 30 : 1 bis 1,25 : 1, besonders bevorzugt 20 : 1 bis 1,5 : 1.

Die Herstellung der Polyisocyanatkomponente A kann lösemittelfrei durchgeführt werden. Gegebenenfalls können aber auch geeignete, gegenüber den reaktiven Gruppen der Ausgangskomponenten inerte Lösemittel mitverwendet werden. Geeignete Lösemittel sind beispielsweise die an sich bekannten üblichen Lacklösemittel, wie z. B. Ethylacetat, Butylacetat, Ethylenglykolmonomethyl- oder - ethyletheracetat, 1-Methoxypropyl-2-acetat (MPA), 3-Methoxy-n-butylacetat, Aceton, 2-Butanon, 4-Methyl-2-pentanon, Cyclohexanon, Toluol, Xylol, Chlorbenzol, Testbenzin, höher substituierte Aromaten, wie sie beispielsweise unter den Bezeichnungen Solventnaphtha, Solvesso^{®}, Isopar^{®}, Nappar^{®} (Deutsche EXXON CHEMICAL GmbH, Köln, DE) und Shellsol^{®} (Deutsche Shell Chemie GmbH, Eschborn, DE) im Handel sind, aber auch Lösemittel wie Propylenglykoldiacetat, Diethylenglykoldimethylether, Dipropylenglykoldimethylether, Diethylenglykolethyl- und -butyletheracetat, N-Methylpyrrolidon und N-Methylcaprolactam, oder beliebige Gemische solcher Lösemittel.

Die Umsetzung der Ausgangskomponenten A1 und A2 führt zur Bildung von Thiourethan- und/oder Thioallophanatstrukturen (SH-NCO-Addition). Es kann von Vorteil sein zur Beschleunigung der SH-NCO-Reaktion Katalysatoren mitzuverwenden. Geeignete Katalysatoren sind insbesondere die üblichen aus der Polyurethanchemie bekannten Urethanisierungs- und Allophanatisierungskatalysatoren.

Beispielhaft genannt seien hier tert. Amine, wie z. B. Triethylamin, Tributylamin, Dimethylbenzylamin, Diethylbenzylamin, Pyridin, Methylpyridin, Dicyclohexylmethylamin, Dimethylcyclohexylamin, N,N,N',N'-Tetramethyldiaminodiethylether, Bis-(dimethylaminopropyl)-harnstoff, N-Methyl- bzw. N-Ethylmorpholin, N-Cocomorpholin, N-Cyclohexylmorpholin, N,N,N',N'-Tetramethylethylendiamin, N,N,N',N'-Tetramethy-1,3-butandiamin, N,N,N',N'-Tetramethyl-1,6-hexandiamin, Pentamethyldiethylentriamin, N-Methylpiperidin, N-Dimethylaminoethylpiperidin, N,N'-Dimethylpiperazin, N-Methyl-N'-dimethylaminopiperazin, 1,2-Dimethylimidazol, 2-Methylimidazol, N,N-Dimethylimidazol-β-phenylethylamin, 1,4-Diazabicyclo-(2,2,2)-octan (DABCO) und Bis-(N,N-dimethylaminoethyl)adipat, Amidine, wie z. B. 1,5-Diazabicyclo[4.3.0]nonen (DBN), 1,8-Diazabicyclo(5.4.0)undecen-7 (DBU) und 2,3-Dimethyl-3,4,5,6-tetrahydropyrimidin, Alkanolaminverbindungen, wie z. B. Triethanolamin, Triisopropanolamin, N-Methyl-diethanolamin, N-Ethyl-diethanolamin, Dimethylaminoethanol und 2-(N,N-Dimethylaminoethoxy)ethanol, N,N',N"-Tris-(dialkylaminoalkyl)hexahydrotriazine, wie z. B. N,N',N"-Tris-(dimethylaminopropyl)-s-hexahydrotriazin, Bis(dimethylaminoethyl)ether sowie Metallsalze, wie z. B. anorganische und/oder organische Verbindungen des Eisens, Bleis, Wismuths, Zinks, und/oder Zinns in üblichen Oxidationsstufen des Metalls, beispielsweise Eisen(II)-chlorid, Eisen(III)-chlorid, Wismut(III)-Wismut(III)-2-ethylhexanoat, Wis-mut(III)-octoat, Wismut(III)-neodecanoat, Zinkchlorid, Zink-2-ethylcaproat, Zink-(II)-stearat, Zink-(II)-n-octanoat, Zink-(II)-2-ethyl-1-hexanoat, Zink-(II)-naphthenat oder Zink-(II)-acetylacetonat, Zinn(II)-octoat, Zinn(II)-ethylcaproat, Zinn(II)-palmitat, Zinn-(II)-laurat, Dibutylzinn(IV)-dilaurat (DBTL), Dibutylzinn(IV)-dichlorid, Zinn-(II)-2-ethyl-1-hexanoat, Dibutylzinnoxid, Dibutylzinndiacetat, Dibutylzinndimaleat oder Dioctylzinndiacetat, Bleioctoat, Zirconiumverbindungen, wie z. B. Zirconium-(IV)-2-ethyl-1-hexanoat, Zirconium-(IV)-neodecanoat, Zirconium-(IV)-naphthenat oder Zirconium-(IV)-acetylacetonat, Aluminium-tri(ethylacetoacetat), Kaliumoctoat, Mangan- Cobalt- oder Nickelverbindungen sowie starke Säuren, wie z. B. Trifluoressigsäure, Schwefelsäure, Chlorwasserstoff, Bromwasserstoff, Phosphorsäure oder Perchlorsäure, oder beliebige Gemische dieser Katalysatoren.

Bevorzugt einzusetzende Katalysatoren zur Beschleunigung der Thiourethanisierungsreaktion sind tertiäre Amine, Amidine und Zinnverbindungen der genannten Art. Besonders bevorzugt sind 1,4-Diazabicyclo-(2,2,2)-octan (DABCO), 1,5-Diazabicyclo[4.3.0]nonen (DBN), 1,8-Diazabicyclo(5.4.0)undecen-7 (DBU), sowie Dibutylzinn(IV)-dilaurat (DBTL), oder beliebige Gemische dieser Katalysatoren.

Falls Katalysatoren zur Beschleunigung der Thiourethanisierungsreaktion eingesetzt werden, so kommen diese in Mengen von 0,001 bis 1,0 Gew.-%, bevorzugt 0,01 bis 0,5 Gew.-%, berechnet als Gesamtmenge an eingesetzten Katalysatoren bezogen auf die Gesamtmenge der verwendeten Polyisocyanate A1 und Mercaptosilane A2 zum Einsatz.

Bevorzugte Katalysatoren zur Beschleunigung der Thioallophanatisierungsreaktion sind Zink- und/oder Zirconiumverbindungen der obengenannten Art. Ganz besonders bevorzugt ist Zink-(II)-n-octanoat, Zink-(II)-2-ethyl-1-hexanoat und/oder Zink-(II)-stearat, Zirconium-(IV)-n-octanoat, Zirconium-(IV)-2-ethyl-1-hexanoat und Zirconium-(IV)-neodecanoat, oder beliebige Gemische dieser Katalysatoren.

Falls Katalysatoren zur Beschleunigung der Thioallophanatisierungsreaktion eingesetzt werden, so kommen diese in Mengen von 0,001 bis 5 Gew.-%, vorzugsweise 0,005 bis 1 Gew.-%, berechnet als Gesamtmenge an eingesetzten Katalysatoren bezogen auf die Gesamtmenge der verwendeten Polyisocyanate A1 und Mercaptosilane A2 zum Einsatz.

Die Bildung von Thiourethan- bzw. Thioallophanatgruppen kann auch thermisch beeinflusst werden. So wird die Thiourethanisierung gewöhnlich bei Temperaturen von 60 bis 140°C, bevorzugt von 70 bis 120°C durchgeführt, während die Thioallophanatisierung bei Temperaturen bis 200°C, bevorzugt bis 160°C durchgeführt wird.

Detaillierte Syntheserouten zur Synthese von Polyisocyanatkomponenten gemäß A auf Basis der Umsetzung von Mercaptosilanen gemäß Komponente A2 mit Polyisocyanten gemäß Komponente A1 unter Bildung von Thiourethanstrukturen, bzw. Thioallophanatstrukturen sind in der EP-B 2892905 bzw. der WO 15/189164 beschreiben, auf die an dieser Stelle verwiesen wird.

In einer bevorzugten Ausführungsform weist die mindestens eine Polyisocyanatkomponente A Thioallophanatstrukturen auf.

In einer besonders bevorzugten Ausführungsform weist die mindestens eine Polyisocyanatkomponente A Thioallophanatstrukturen auf, die auf der Umsetzung von monomerem aliphatischem Diisocyanat (A1) mit einem Mercaptosilan der Formel I (A2) basieren.

In einer ganz besonders bevorzugten Ausführungsform ist das monomere aliphatische Diisocyanat A1 PDI und/oder HDI. In einer alternativen ganz besonders bevorzugten Ausführungsform ist das Mercaptosilan A2 Mercaptopropyltrimethoxysilan. Am meisten bevorzugt werden als monomeres Diisocyanat HDI und als Mercaptosilan Mercaptopropyltrimethoxysilan eingesetzt.

Die Polyisocyanatkomponenten A weisen bevorzugt einen NCO-Gehalt von 1,3 bis 24,9 Gew.-%, besonders bevorzugt von 4,0 bis 23,5 Gew.-%, ganz besonders bevorzugt von 5,0 bis 21,0 Gew.-%, und eine mittlere NCO-Funktionalität bevorzugt von 1,0 bis 4,9, besonders bevorzugt von 1,8 bis 4,8, ganz besonders bevorzugt von 2,0 bis 4,0 auf.

### Alkoxysilyl-funktionelle Siloxane B

Die erfindungsgemäßen Beschichtungsmittel enthalten mindestens ein alkoxysilyl-funktionelles Siloxan B.

Siloxane sind dem Fachmann bekannt. Es handelt sich um von reinen Silanen (das heißt binären aus Si und H bestehenden Verbindungen) abgeleitete Komponenten der allgemeinen Formel R₁Si-[0-SiR₂]ₙ-0-SiR₃, wobei R Wasserstoffatome oder Alkylgruppen sein können. In Siloxanen sind die Siliziumatome also über genau ein Sauerstoffatom mit ihrem benachbarten Siliziumatom verknüpft, sie enthalten zumindest eine Si-O-Si Bindung. Ist mindestens eines der Wasserstoffatome durch einen organischen Rest wie beispielsweise eine Alkylgruppe ersetzt, werden diese auch als Organosiloxane bezeichnet. Oligomere oder polymere Organosiloxane (Siloxane mit R ≠H) besitzen lange Si-O- Hauptketten und werden wiederum als Silicone bezeichnet.

Enthält der zuvor beschriebene organische Rest des Organosiloxans zudem mindestens eine Alkoxysilylgruppe, ist in dem organischen Rest also mindestens ein Wasserstoffrest durch eine Alkoxysilylgruppe substituiert, wodurch also zumindest anteilig ein Wasserstoff des vom reinen Siloxan abgeleiteten Derivats durch einen organischen Rest substituiert ist, der selber wiederum eine alkoxysilylfunktionelle Gruppe enthält, wird dies im Rahmen der vorliegenden Erfindung als alkoxysilylfunktionelles Siloxan (Komponente B) bezeichnet.

Bei einem alkoxysilylfunktionellen Rest handelt es sich um eine funktionelle Gruppe, die sich von einem Alkoxysilan ableitet, eine von einem reinen Silan abgeleitete Komponente enthaltend eine Gruppe Si-OR. Es ist also mindestens ein Wasserstoffatom eines reinen Silans durch eine Alkoxygruppe -OR, also eine über Sauerstoff mit dem Silizium verbundene Alkylgruppe, substituiert. Beispielsweise seien Mono-, Di-, oder Tri-methoxy- oder -ethoxy-silan genannt.

Demzufolge handelt es sich bei den erfindungsgemäß einzusetzenden alkoxysilylfunktionellen Siloxanen B um Derivate des Siloxans, in denen mindestens ein Wasserstoffatom durch einen organischen Rest substituiert wurde, in dem wiederum mindestens ein Wasserstoffrest durch eine Alkoxysilylgruppe ersetzt wurde. Die Alkoxysilylgruppe ist demzufolge immer als funktionelle Gruppe einer Alkylgruppe zu verstehen, die selber an dem Siloxangerüst angebunden ist. Die Alkoxysilylgruppe ist also immer über einen zweibindigen organischen Rest R, beispielsweise ein Alkylen, mit dem Si-O-Si Gerüst verbunden und bindet niemals direkt an das Siloxan Grundgerüst aus Si-O-Si Einheiten an.

Die erfindungsgemäß zu verwendenden alkoxysilylfunktionelle Siloxane B entsprechen der allgemeinen Formel (II):

R⁴-SiR⁵₂-Aₓ-B_{y}-O-SiR⁶₂-R⁷ (II),

worin A eine Gruppe -[O-SiR⁸₂]- und B eine Gruppe -[O-SiR⁹R¹⁰]- ist,
R⁵, R⁶, R⁸ und R⁹ unabhängig voneinander lineare oder verzweigte Alkylgruppen mit 1 bis 4 Kohlenstoffatomen sind,
R⁴, R⁷ und R¹⁰ unabhängig voneinander eine Gruppe -L-R¹¹ sind, worin
L = eine lineare oder verzweigte 2-bindige Alkylgruppe und
R¹¹ = H oder -Si(R¹²)_{z}(OR¹³)_{3-z}mit R¹², R¹³ = eine lineare oder verzweigte Alkylgruppe mit 1 bis 4 Kohlenstoffatomen und z = 0, 1, oder 2, bevorzugt z = 0, ist,
mit der Vorgabe, das mindestens einer der Reste R⁴ oder R⁷ und/oder mindestens eine Gruppe B eine Gruppe R¹¹ = -Si(R¹²)_{z}(OR¹³)_{3-z} beinhaltet,
x unabhängig für eine ganze Zahl von 1 -20 steht, und
y unabhängig für eine ganze Zahl von 0-10 steht,
wobei bevorzugt x+y ≤ 20 ist.

Das Siloxan B enthält also jedenfalls mindestens eine Gruppe -Si(R¹²)_{z}(OR¹³)_{3-z}.

Ist y > 0, sind neben Bausteinen A auch Bausteine B in der Polysiloxankette enthalten. Ist dagegen y = 0, sind lediglich Bausteine A vorhanden. Bevorzugt sind lediglich Bausteine A vorhanden (y = 0). Nochmals bevorzugt ist y = 0 und x eine Zahl von 6 bis 14.

Die alkoxysilylfunktionellen Siloxane B können eine lineare oder verzweigte Form haben, je nachdem, welche Reste R⁴, R⁷ und/oder R¹⁰ eine Alkoxysilylgruppe enthalten. Sind Alkoxysilylgruppen in der Form des Rests R¹¹ = -Si(R¹²)_{z}(OR¹³)_{3-z} mit R¹², R¹³ = eine lineare oder verzweigte Alkylgruppe mit 1 - 4 Kohlenstoffatomen und z = 0, 1, oder 2, bevorzugt z = 0, nur terminal in den Resten R⁴ und R⁷ angeordnet, ist das alkoxysilylfunktionelle Siloxan linear. Sind hingegen auch Alkoxysilylgruppen in den Rest R¹⁰ enthalten, ist das Siloxan verzweigt. Bevorzugt ist das Siloxan linear.

Die Reste R⁴, R⁷ und R¹⁰ sind gleiche oder verschiedene Reste, wobei immer mindestens einer der Reste eine Gruppe -L-R¹¹ darstellt, in der R¹¹ eine Alkoxysilylgruppe entspricht. Ganz besonders bevorzugt weist mindestens eine dieser Reste R⁴, R⁷ und R¹⁰ eine Gruppe -L-R¹¹ auf, in der L eine Ethylengruppe und R¹¹ eine Trialkoxysilangruppe ist. Ganz besonders bevorzugt ist L eine Ethylengruppe und R¹¹ eine Trimethoxy- oder Triethoxysilangruppe. Nochmals ganz besonders bevorzugt ist y = 0 und es stellen beide terminalen Gruppen R⁴ und R⁷ eine Gruppe -L-R¹¹ dar, in der L eine Ethylengruppe und R¹¹ eine Trimethoxy- oder Triethoxysilangruppe ist. In einer weiteren ganz besonders bevorzugten Ausführungsform ist y > 0, entspricht R¹⁰ einer Gruppe -L-R¹¹, in der L eine Ethylengruppe und R¹¹ eine Trialkoxysilangruppe ist und R⁴ und R⁷ eine Gruppe -L-R¹¹ sind, in der R¹¹ einem Wasserstoffatom entspricht.

Besonders bevorzugt sind die Reste R⁵, R⁶, R⁸, R⁹, R¹² und R¹³ gleiche oder verschiedene Alkylreste, ganz besonders bevorzugt sind diese Reste R⁵, R⁶, R⁸, R⁹, R¹² und R¹³ lineare Alkylgruppen mit ein bis vier Kohlenstoffatomen, und nochmals ganz besonders bevorzugt sind die Reste R⁵, R⁶, R⁸, R⁹, R¹² und R¹³ Methyl- und/oder Ethylreste, insbesondere Methylreste.

Komponente B enthält mindestens ein alkoxysilylfunktionelles Siloxan. Demnach können alkoxysilylfunktionelle Siloxane mit der Alkoxysilylfunktion in der Seitenkette neben solchen vorliegen, in der die Alkoxysilylfunktion(en) terminal an der Siloxankette vorliegen.

Besonders bevorzugte alkoxysilylfunktionellen Siloxane B sind im Handel über die Firma Shin Etsu erhältlich.

Bevorzugt enthalten die erfindungsgemäßen Beschichtungsmittel von 0,001 bis 5 Gew.-%, bevorzugt von 0,005 bis 3 Gew.-% und besonders bevorzugt von 0,01 bis 2 Gew.-%, an Komponente B, wobei die Gew.-%-Angaben jeweils bezogen sind auf die Gesamtmenge aus Polyisocyanatkomponente A, Siloxankomponente B und isocyanatreaktiver Komponente C.

### Hydroxylgruppen-haltige Verbindungen C

Als Hydroxylgruppen-haltige Verbindungen C werden beliebige Polyole, die mindestens zwei Hydroxylgruppen tragen, eingesetzt. Geeignete Hydroxylgruppen-haltige Verbindungen C sind beispielsweise die üblichen aus der Polyurethanchemie bekannten Polyhydroxylverbindungen, wie z. B. Polyesterpolyole, Polyetherpolyole, Polycarbonatpolyole und/oder Polyacrylatpolyole, oder beliebige Abmischungen solcher Polyole.

Geeignete Polyesterpolyole C sind beispielsweise solche eines mittleren, aus Funktionalität und Hydroxylzahl berechenbaren Molekulargewichtes von 200 bis 3000, vorzugsweise von 250 bis 2500, mit einem Hydroxylgruppen-Gehalt von 1 bis 21 Gew.-%, vorzugsweise 2 bis 18 Gew.-%, wie sie sich in an sich bekannter Art und Weise durch Umsetzung von mehrwertigen Alkoholen mit unterschüssigen Mengen an mehrwertigen Carbonsäuren, entsprechenden Carbonsäureanhydriden, entsprechenden Polycarbonsäureestern von niederen Alkoholen oder Lactonen herstellen lassen.

Zur Herstellung dieser Polyesterpolyole geeignete mehrwertige Alkohole sind insbesondere solche des Molekulargewichtsbereichs 62 bis 400 wie z. B. 1,2-Ethandiol, 1,2- und 1,3-Propandiol, die isomeren Butandiole, Pentandiole, Hexandiole, Heptandiole und Octandiole, 1,2- und 1,4-Cyclohexandiol, 1,4-Cyclohexandimethanol, 4,4'-(1-Methylethyliden)-biscyclohexanol, 1,2,3-Propantriol, 1,1,1-Trimethylolethan, 1,2,6-Hexantriol, 1,1,1-Trimethylolpropan, 2,2-Bis(hydroxymethyl)-1,3-propandiol oder 1,3,5-Tris(2-hydroxyethyl)-isocyanurat.

Die zur Herstellung der Polyesterpolyole C verwendeten Säuren oder Säurederivate können aliphatischer, cycloaliphatischer und/oder heteroaromatischer Natur sein und gegebenenfalls, z. B. durch Halogenatome, substituiert und/oder ungesättigt sein. Beispiele geeigneter Säuren sind beispielsweise mehrwertige Carbonsäuren des Molekulargewichtsbereichs 118 bis 300 oder deren Derivate wie beispielsweise Bernsteinsäure, Adipinsäure, Sebacinsäure, Phthalsäure, Isophthalsäure, Trimellitsäure, Phthalsäureanhydrid, Tetrahydrophthalsäure, Maleinsäure, Maleinsäureanhydrid, dimere und trimere Fettsäuren, Terephthalsäuredimethylester und Terephthalsäure-bis-glykolester.

Zur Herstellung der Polyesterpolyole C können auch beliebige Gemische dieser beispielhaft genannten Ausgangsverbindungen eingesetzt werden.

Geeignete Polyesterpolyole C sind auch solche, wie sie sich in an sich bekannter Weise aus Lactonen und einfachen mehrwertigen Alkoholen, wie z. B. den oben beispielhaft genannten, als Startermolekülen unter Ringöffnung herstellen lassen. Geeignete Lactone zur Herstellung dieser Polyesterpolyole sind beispielsweise β-Propiolacton, □-Butyrolacton, □- und □-Valerolacton, □-Caprolacton, 3,5,5- und 3,3,5-Trimethylcaprolacton oder beliebige Gemische solcher Lactone.

Die Herstellung dieser Lactonpolyester erfolgt im Allgemeinen in Gegenwart von Katalysatoren wie beispielsweise Lewis- oder Brönstedt-Säuren, organischen Zinn- oder Titanverbindungen bei Temperaturen von 20 bis 200°C, vorzugsweise 50 bis 160°C.

Geeignete Polyetherpolyole C sind beispielsweise solche eines mittleren, aus Funktionalität und Hydroxylzahl berechenbaren Molekulargewichtes von 200 bis 6000, vorzugsweise 250 bis 4000, mit einem Hydroxylgruppen-Gehalt von 0,6 bis 34 Gew.-%, vorzugsweise 1 bis 27 Gew.-%, wie sie in an sich bekannter Weise durch Alkoxylierung geeigneter Startermoleküle zugänglich sind. Zur Herstellung dieser Polyetherpolyole können beliebige mehrwertige Alkohole, beispielsweise solche des Molekulargewichtsbereichs 62 bis 400, wie sie oben bei der Herstellung von Polyesterpolyolen beschrieben werden, als Startermoleküle eingesetzt werden.

Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können.

Geeignete Polyacrylatpoylole C sind beispielsweise solche eines mittleren aus Funktionalität und Hydroxylzahl berechenbaren oder durch Gelpermeationschromatografie (GPC) bestimmbaren Molekulargewichtes von 800 bis 50.000, vorzugsweise von 1000 bis 20.000, mit einem Hydroxylgruppengehalt von 0,1 bis 12 Gew.-%, vorzugsweise 1 bis 10, wie sie sich in an sich bekannter Weise durch Copolymerisation Hydroxylgruppen aufweisender olefinisch ungesättigter Monomerer mit hydroxylgruppenfreien olefinischen Monomeren herstellen lassen.

Beispiele für geeignete Monomere zur Herstellung der Polyacrylatpolyole C sind Vinyl- bzw. Vinylidenmonomere wie z.B. Styrol, □-Methylstyrol, o- bzw. p-Chlorstyrol, o-, m- oder p-Methylstyrol, p-tert.-Butylstyrol, Acrylsäure, Acrylnitril, Methacrylnitril, Acryl- und Methacrylsäureester von Alkoholen mit bis zu 18 Kohlenstoffatomen, wie z. B. Methylacrylat, Ethylacrylat, n-Propylacrylat, Isopropylacrylat, n-Butylacrylat, Isobutylacrylat, tert-Butylacrylat, Amylacrylat, Hexylacrylat, 2-Ethylhexylacrylat, Isooctylacrylat, 3,3,5-Trimethylhexylacrylat, Stearylacrylat, Laurylacrylat, Cyclopentylacrylat, Cyclohexylacrylat, 4-tert.-Butycyclohexylacrylat, Isobornylacrylat, Methylmethacrylat, Ethylmethacrylat, n-Propylmethacrylat, Isopropylmethacrylat, Butylmethacrylat, Isobutylmethacrylat, tert-Butylmethacrylat, Amylmethacrylat, Hexylmethacrylat, 2-Ethylhexylmethacrylat, Isooctylmethacrylat, 3,3,5-Trimethylhexylmethacrylat, Stearylmethacrylat, Laurylmethacrylat, Cyclopentylmethacrylat, Cyclohexylmethacrylat, 4-tert.-Butycyclohexylmethacrylat, Norbornylmethacrylat oder Isobornylmethacrylat, Diester der Fumarsäure, Itaconsäure oder Maleinsäure mit 4 bis 8 Kohlenstoffatome aufweisenden Alkoholen, Acrylsäureamid, Methacrylsäureamid, Vinylester von Alkanmonocarbonsäuren mit 2 bis 5 Kohlenstoffatomen, wie z. B. Vinylacetat oder Vinylpropionat, Hydroxyalkylester der Acrylsäure oder Methacrylsäure mit 2 bis 5 Kohlenstoffatomen im Hydroxyalkylrest, wie z. B. 2-Hydroxyethyl-, 2-Hydroxypropyl-, 3-Hydroxypropyl-, 3-Hydroxybutyl-, 4-Hydroxybutyl-, Trimethylolpropanmono- oder Pentaerythritmonoacrylat oder -methacrylat, sowie beliebige Gemische solcher beispielhaft genannter Monomere.

Bevorzugte Hydroxylgruppen-haltige Verbindungen C sind Polyesterpolyole, Polycarbonatpolyole und/oder Polyacrylatpolyole der genannten Art. Besonders bevorzugte Hydroxylgruppen-haltige Verbindungen C sind Polyacrylatpolyole der genannten Art, die gegebenenfalls im Gemisch mit Polyesterpolyolen und/oder Polycarbonatpolyolen der genannten Art eingesetzt werden können. Ganz besonders bevorzugt enthält die Komponenten C ausschließlich Polyacrylatpolyole der genannten Art.

### Katalysatoren zur Vernetzung von Silangruppen D

Die erfindungsgemäßen Beschichtungsmittel enthalten bevorzugt mindestens einen Katalysator zur Vernetzung von Silangruppen. Dieser kann in der ersten oder der zweiten Beschichtungsmittelkomponente oder in beiden Beschichtungsmittelkomponenten enthalten sein. Im letztgenannten Fall können in beiden Komponenten der gleiche bzw. gleiche oder unterschiedliche Katalysatoren enthalten sein.

Bei diesen Katalysatoren handelt es sich um beliebige Verbindungen, die in der Lage sind, die Hydrolyse und Kondensation von Alkoxysilangruppen oder bevorzugt die thermisch induzierte Silankondensation zu beschleunigen.

Geeignete Katalysatoren D sind beispielsweise Säuren, wie z. B. organische Carbonsäuren, Schwefelsäure, p-Toluolsulfonsäure, Trifluormethansulfonsäure, Dodecylbenzolsulfonsäure, Essigsäure, Trifluoressigsäure, Phosphorsäuremonoester und Phosphorsäurediester, wie z. B. Dibutylphosphat, Phosphorsäure-2-ethylhexylester, Phosphorsäurephenylester und Phosphorsäure-bis(2-ethylhexyl)ester, sowie Phosphonsäurediester und Diphosphonsäurediester, wie sie z. B. in der WO 2007/033786 beschrieben sind.

Als Katalysatoren D ebenfalls geeignet sind auch Basen, wie z. B. die N-substituierten Amidine 1,5-Diazabicyclo[4.3.0]non-5-en (DBN) und 1,5-Diazabicyclo[5.4.0]undec-7-en (DBU), oder auch Metallsalze und Metallchelate, wie z. B. Tetraisopropyltitanat, Tetrabutyltitanat, Titan(IV)acetylacetonat, Aluminium-tri-sec-butylat, Aluminiumacetylacetonat, Aluminiumtriflat, Zinntriflat oder Zirkonethylacetoacetat, wie sie z. B. in WO 2006/042658 beschrieben sind.

Geeignete Katalysatoren D sind auch Phosphorsäure- und Phosphonsäureester der oben genannten Art, die in mit Aminen, vorzugsweise mit tertiären Aminen blockierter Form vorliegen. Besonders bevorzugte Katalysatoren dieses Typs sind solche, die im Temperaturbereich der Aushärtung von Automobildeck- und -klarlacken, beispielsweise im Bereich von 100 bis 150°C unter Abspaltung des Blockierungsamins die sauren Phosphorsäure- und Phosphonsäureester wieder freisetzen, die die eigentlich wirksame Katalysatoren darstellen. Geeignete aminblockierte Phosphorsäurekatalysatoren D sind beispielsweise in WO 2008/074489 und WO 2009/077180 beschrieben.

Ebenfalls geeignete Katalysatoren D sind organische Sulfonsäuren der oben genannten Art, die in blockierter Form, beispielsweise in amin-neutralisierter Form oder als Addukt an Epoxiden, wie in der DE 2 356 768 B1 beschrieben, eingesetzt werden und oberhalb von 100°C die katalytisch aktiven Sulfonsäuren wieder freisetzen.

Weitere zur Vernetzung von Silangruppen geeignete Katalysatoren D sind auch Tetraalkylammoniumcarboxylate, wie z. B. Tetramethylammoniumformiat, Tetramethylammoniumacetat, Tetramethylammoniumpropionat, Tetramethylammoniumbutyrat, Tetramethylammoniumbenzoat, Tetraethylammoniumformiat, Tetraethylammoniumacetat, Tetraethylammoniumpropionat, Tetraethylammoniumbutyrat, Tetraethylammoniumbenzoat, Tetrapropylammoniumformiat, Tetrapropylammoniumacetat, Tetrapropylammonium-propionat, Tetrapropylammoniumbutyrat, Tetrapropylammonium-benzoat, Tetrabutylammoniumformiat, Tetrabutylammoniumacetat, Tetrabutylammoniumpropionat, Tetrabutylammoniumbutyrat und/oder Tetrabutylammoniumbenzoat.

Zur Vernetzung von Silangruppen geeignete Katalysatoren D sind auch quaternäre Ammonium- und Phosphoniumpolyfluoride, wie sie z. B. aus der EP-A0 798 299, EP-A0 896 009 und EP-A0 962 455 als Trimerisierungskatalysatoren für Isocyanatgruppen bekannt sind.

Geeignete Katalysatoren D sind schließlich auch Zink-Amidin-Komplexe, die nach dem Verfahren der WO 2014/016019 durch Umsetzung eines oder mehrerer Zink(II)biscarboxylate mit Amidinen hergestellt werden können.

Bevorzugte Katalysatoren D zur Vernetzung von Silangruppen sind saure Phosphorsäureester, Phosphonsäureester und Sulfonsäuren der genannten Art, die gegebenenfalls in mit Aminen blockierter Form vorliegen können, sowie Tetraalkylammoniumcarboxylate der genannten Art. Besonders bevorzugte Katalysatoren D sind mit Aminen blockierte Phosphorsäureester und Sulfonsäuren sowie die genannten Tetraalkylammoniumcarboxylate. Ganz besonders bevorzugte Katalysatoren B, bzw. B' sind mit Aminen blockierte Phosphorsäurephenylester und Phosphorsäure-bis(2-ethylhexyl)ester, Tetraethylammoniumbenzoat und Tetrabutylammoniumbenzoat.

Die Katalysatoren D kommen in den erfindungsgemäßen Beschichtungsmitteln in Mengen von 0,005 Gew.-% bis zu 5 Gew.-%, vorzugsweise von 0,005 Gew.-% bis zu 2 Gew.-%, besonders bevorzugt von 0,005 Gew.-% bis zu 1 Gew.-%, berechnet als Summe aller eingesetzten Katalysatoren D und bezogen auf die Gesamtmenge aus Polyisocyanatkomponente A, Siloxankomponente B und Hydroxylgruppenhaltiger Komponente C zum Einsatz.

### Weitere Komponenten

### Hilfs- und Zusatzstoffe

Die erfindungsgemäßen Beschichtungsmittel können gegebenenfalls weitere Hilfs- und Zusatzstoffe enthalten. Diese können in der ersten oder der zweiten Beschichtungsmittelkomponente oder in beiden Beschichtungsmittelkomponenten enthalten sein. Im letztgenannten Fall können in beiden Komponenten gleiche oder unterschiedliche Hilfs- und Zusatzstoffe enthalten sein.

Bei den Hilfs- und Zusatzstoffen handelt es sich insbesondere um die dem Fachmann aus der Lacktechnologie bekannten Hilfs- und Zusatzstoffe, wie z. B. Lösungsmittel, UV-Stabilisatoren, Antioxidantien, Wasserfänger, Verlaufsmittel, Rheologieadditive, Slipadditive, Entschäumer, Füllstoffe und/oder Pigmente sowie anorganische Nanopartikel, insbesondere die Oxide des Siliciums, Aluminiums, Cers und/oder Titans, die ggf. auch in Form entsprechender Sole wie vorteilhaft Organosole des Siliciumdioxids eingesetzt werden können.

Zur Verringerung der Verarbeitungsviskosität können die erfindungsgemäßen Beschichtungsmittel beispielsweise mit üblichen organischen Lösungsmitteln verdünnt werden. Hierfür geeignete Lösungsmittel sind beispielsweise die bereits vorstehend bei der Herstellung der Silangruppen enthaltenden Polyisocyanate A als gegebenenfalls mitzuverwendende Lösungsmittel beschriebenen Lacklösungsmittel, die sich gegenüber den reaktiven Gruppen der Beschichtungsmittelbestandteile chemisch inert verhalten und einen Wassergehalt von höchstens 1,0 Gew.-%, besonders bevorzugt höchstens 0,5 Gew.-% bezogen auf eingesetztes Lösungsmittel aufweisen.

Geeignete UV-Stabilisatoren können vorzugsweise ausgewählt werden aus der Gruppe, bestehend aus Piperidinderivaten, wie z.B. 4-Benzoyloxy-2,2,6,6-tetramethylpiperidin, 4-Benzoyloxy-1,2,2,6,6-pentamethylpiperidin, Bis-(2,2,6,6-tetra-methyl-4-piperidyl)-sebacat, Bis(1,2,2,6,6-pentamethyl-1-4-piperidinyl)-sebacat, Bis-(2,2,6,6-tetramethyl-4-piperidyl)-suberat, Bis-(2,2,6,6-tetramethyl-4-piperidyl)-dodecandioat; Benzophenonderivaten, wie z.B. 2,4-Dihydroxy-, 2-Hydroxy-4-methoxy-, 2-Hydroxy-4-octoxy-, 2-Hydroxy-4-dodecyloxy- oder 2,2'-Dihydroxy-4-dodecyloxy-benzophenon; Benztriazolderivaten, wie z.B. 2-(2H-Benzotriazol-2-yl)-4,6-di-tert-pentylphenol, 2-(2H-Benzotriazol-2-yl)-6-dodecyl-4-methylphenol, 2-(2H-Benzotriazol-2-yl)-4,6-bis(1-methyl-1-phenylethyl)phenol, 2-(5-Chlor-2H-benzotriazol-2-yl)-6-(1,1-dimethylethyl)-4-methylphenol, 2-(2H-benzotriazol-2-yl)-4-(1,1,3,3-tetramethylbutyl)phenol, 2-(2H-Benzotriazol-2-yl)-6-(1-methyl-1-phenylethyl)-4-(1,1,3,3-tetramethylbutyl)phenol, Isooctyl-3-(3-(2H-benzotriazol-2-yl)-5-(1,1-dimethylethyl)-4-hydroxyphenyl-propionat), 2-(2H-Benzotriazol-2-yl)-4,6-bis(1,1-dimethylethyl)phenol, 2-(2H-Benzotriazol-2-yl)-4,6-bis(1-methyl-1-phenylethyl)phenol, 2-(5-Chlor-2H-benzotriazol-2-yl)-4,6-bis(1,1-dimethylethyl)phenol; Oxalaniliden, wie z.B. 2-Ethyl-2'-ethoxy- oder 4-Methyl-4'-methoxyoxalanilid; Salicylsäureestern, wie z.B. Salicylsäurephenylester, Salicylsäure-4-tert-butylphenylester, Salicylsäure-4-tert-octylphenylester; Zimtsäureesterderivaten, wie z.B. α-Cyano-β-methyl-4-methoxyzimtsäuremethylester, α-Cyano-β-methyl-4-methoxyzimtsäurebutyl-ester, α-Cyano-β-phenylzimtsäureethylester, α-Cyano-β-phenylzimtsäureisooctylester; und Malonesterderivaten, wie z.B. 4-Methoxy-benzylidenmalonsäuredimethylester, 4-Methoxybenzylidenmalonsäurediethylester, 4-Butoxy-benzylidenmalonsäuredimethylester. Diese bevorzugten UV-Stabilisatoren können sowohl einzeln als auch in beliebigen Kombinationen untereinander zum Einsatz kommen.

Gegebenenfalls werden ein oder mehrere der beispielhaft genannten UV-Stabilisatoren dem erfindungsgemäßen Beschichtungsmittel vorzugsweise in Mengen von 0,001 bis 3,0 Gew.-%, besonders bevorzugt 0,01 bis 2 Gew.-%, berechnet als Gesamtmenge an eingesetzten UV-Stabilisatoren bezogen auf die Gesamtmenge aus Polyisocyanatkomponente A, Siloxankomponente B, isocyanatreaktiver Komponente C, und Katalysatorkomponente D zugesetzt.

Geeignete Antioxidantien sind vorzugsweise sterisch gehinderten Phenole, welche vorzugsweise ausgewählt werden können aus der Gruppe, bestehend aus 2,6-Di-tert-butyl-4-methylphenol (Ionol), Pentaerythrit-tetrakis(3-(3,5-di-tert-butyl-4-hydroxy-phenyl)-propionat), Octadecyl-3-(3,5-di-tert-butyl-4-hydroxyphenyl)-propionat, Triethylen-glykol-bis(3-tert-butyl-4-hydroxy-5-methylphenyl)propionat, 2,2'-Thio-bis(4-methyl-6-tert-butylphenol) und 2,2'-Thiodiethyl-bis[3-(3,5-di-tert-butyl-4-hydroxyphenyl)propionat]. Diese können bei Bedarf sowohl einzeln als auch in beliebigen Kombinationen untereinander eingesetzt werden.

Diese Antioxidantien werden vorzugsweise in Mengen von 0,01 bis 3,0 Gew.-%, besonders bevorzugt 0,02 bis 2,0 Gew.-%, berechnet als Gesamtmenge an eingesetzten Antioxidantien bezogen auf die Gesamtmenge aus Polyisocyanatkomponente A, Siloxankomponente B und isocyanatreaktiver Komponente C eingesetzt.

Um eine vorzeitige Vernetzung der Silangruppen in den erfindungsgemäßen Beschichtungsmitteln zu unterbinden, kann der Zusatz von Wasserfängern, beispielsweise Orthoameisenestern, wie z. B. Triethylorthoformiat, oder Vinylsilanen, wie z. B. Vinyltrimethoxysilan, vorteilhaft sein. Diese Wasserfänger kommen, falls überhaupt, in Mengen von 0,01 Gew.-% bis zu 5 Gew.-%, vorzugsweise von 0,01 Gew.-% bis zu 2 Gew.-%, bezogen auf die auf die Gesamtmenge aus Polyisocyanatkomponente A, Siloxankomponente B und isocyanatreaktiver Komponente C zum Einsatz.

Zur Verbesserung der Substratbenetzung können die erfindungsgemäßen Beschichtungsmittel gegebenenfalls geeignete Verlaufsmittel, beispielsweise organisch modifizierte Siloxane, wie z. B. Polyethermodifizierte Siloxane, Polyacrylate und/oder Fluortenside, enthalten. Diese Verlaufsmittel kommen, falls überhaupt, in Mengen von 0,01 Gew.-% bis zu 3 Gew.-%, vorzugsweise von 0,01 Gew.-% bis zu 2 Gew.-%, besonders bevorzugt von 0,05 bis 1,5 Gew.-%, bezogen auf die auf die Gesamtmenge aus Polyisocyanatkomponente A, Siloxankomponente B und isocyanatreaktiver Komponente C zum Einsatz.

Die in den erfindungsgemäßen Beschichtungsmitteln ebenfalls als weitere Hilfs- und Zusatzstoffe gegebenenfalls enthaltenen Rheologieadditive, Slipadditive, Entschäumer, Füllstoffe, Mattierungsmittel und/oder Pigmente sind dem Fachmann bekannt und kommen falls überhaupt in der Lacktechnologie üblichen Mengen zum Einsatz. Eine ausführliche Übersicht über derartige geeignete Hilfs- und Zusatzstoffe findet sich beispielsweise in Bodo Müller, "Additive kompakt", Vincentz Network GmbH & Co KG (2009).

Als weitere Hilfs- und Zusatzstoffe können den erfindungsgemäßen Beschichtungsmitteln zur Steuerung der Aushärtegeschwindigkeit geeignete Katalysatoren zugegeben werden, beispielsweise die in der Isocyanatchemie üblichen Urethanisierungs- und Allophanatisierungskatalysatoren, wie beispielsweise tert. Amine, wie z. B. Triethylamin, Tributylamin, Dimethylbenzylamin, Diethylbenzylamin, Pyridin, Methylpyridin, Dicyclohexylmethylamin, Dimethylcyclohexylamin, N,N,N',N'-Tetramethyldiaminodiethylether, Bis-(dimethylaminopropyl)-harnstoff, N-Methyl- bzw. N-Ethylmorpholin, N-Cocomorpholin, N-Cyclohexylmorpholin, N,N,N',N'-Tetramethylethylendiamin, N,N,N',N'-Tetramethy-1,3-butandiamin, N,N,N',N'-Tetramethyl-1,6-hexandiamin, Pentamethyldiethylentriamin, N-Methylpiperidin, N-Dimethylaminoethylpiperidin, N,N'-Dimethylpiperazin, N-Methyl-N'-dimethylaminopiperazin, 1,2-Dimethylimidazol, 2-Methylimidazol, N,N-Dimethylimidazol-β-phenylethylamin, 1,4-Diazabicyclo-(2,2,2)-octan (DABCO) und Bis-(N,N-dimethylaminoethyl)adipat, Amidine, wie z. B. 1,5-Diazabicyclo[4.3.0]nonen (DBN), 1,8-Diazabicyclo(5.4.0)undecen-7 (DBU) und 2,3-Dimethyl-3,4,5,6-tetrahydropyrimidin, Alkanolaminverbindungen, wie z. B. Triethanolamin, Triisopropanolamin, N-Methyl-diethanolamin, N-Ethyl-diethanolamin, Dimethylaminoethanol und 2-(N,N-Dimethylaminoethoxy)ethanol, N,N',N"-Tris-(dialkylaminoalkyl)hexahydrotriazine, wie z. B. N,N',N"-Tris-(dimethylaminopropyl)-s-hexahydrotriazin, Bis(dimethylaminoethyl)ether sowie Metallsalze, wie z. B. anorganische und/oder organische Verbindungen des Eisens, Bleis, Wismuths, Zinks, und/oder Zinns in üblichen Oxidationsstufen des Metalls, beispielsweise Eisen(II)-chlorid, Eisen(III)-chlorid, Wismut(III)-Wismut(III)-2-ethylhexanoat, Wis-mut(III)-octoat, Wismut(III)-neodecanoat, Zinkchlorid, Zink-2-ethylcaproat, Zink-(II)-stearat, Zink-(II)-n-octanoat, Zink-(II)-2-ethyl-1-hexanoat, Zink-(II)-naphthenat oder Zink-(II)-acetylacetonat, Zinn(II)-octoat, Zinn(II)-ethylcaproat, Zinn(II)-palmitat, Zinn-(II)-laurat, Dibutylzinn(IV)-dilaurat (DBTL), Dibutylzinn(IV)-dichlorid, Zinn-(II)-2-ethyl-1-hexanoat, Dibutylzinnoxid, Dibutylzinndiacetat, Dibutylzinndimaleat oder Dioctylzinndiacetat, Bleioctoat, Zirconiumverbindungen, wie z. B. Zirconium-(IV)-2-ethyl-1-hexanoat, Zirconium-(IV)-neodecanoat, Zirconium-(IV)-naphthenat oder Zirconium-(IV)-acetylacetonat, Aluminium-tri(ethylacetoacetat), Kaliumoctoat, Mangan- Cobalt- oder Nickelverbindungen sowie starke Säuren, wie z. B. Trifluoressigsäure, Schwefelsäure, Chlorwasserstoff, Bromwasserstoff, Phosphorsäure oder Perchlorsäure, oder beliebige Gemische dieser Katalysatoren.

### Weitere hydrolysierbare Silanverbindungen

Als weitere Komponenten können den erfindungsgemäßen Beschichtungsmitteln auch beliebige weitere hydrolysierbare Silanverbindungen, wie z. B. Tetramethoxysilan, Tetraethoxysilan, Methyltrimethoxysilan, Methyltriethoxysilan, Ethyltriethoxysilan, Isobutyltrimethoxysilan, Isobutyltriethoxysilan, Octyltriethoxysilan, Octyltrimethoxysilan, (3-Glycidyloxypropyl)methyldiethoxysilan, (3-Glycidyloxypropyl)trimethoxy-silan, Phenyltrimethoxysilan oder Phenyltriethoxysilan, oder Gemische solcher Silanverbindungen als Reaktionspartner zugesetzt werden.

Diese Verbindungen werden bevorzugt der Komponenten (I) zugegeben. Werden sie der Komponente (II) zugegeben, ist durch einfache Vorversuche an der konkreten Zusammenstellung sicherzustellen, dass die Stabilität der Komponente (II) über die gewünschte Lagerzeit erhalten bleibt. Trübungen oder Anstieg von Viskosität sind beispielsweise Zeichen für mangelnde Stabilität.

### Weitere Polyisocyanate

Neben den Polyisocyanaten A können die Beschichtungsmittelkomponente I auch weitere Poyisocyanate enthalten. Dies können beispielsweise monomere oder modifizierte Polyisocyanate sein, wie sie oben unter Komponente A1 beschrieben wurden.

In den erfindungsgemäßen zwei-komponentigen Beschichtungsmitteln liegen die Reaktionspartner üblicherweise in solchen Mengen vor, dass auf jede Isocyanatgruppe 0,5 bis 3, vorzugsweise 0,6 bis 2,0, besonders bevorzugt 0,8 bis 1,6 gegenüber Isocyanaten reaktive Gruppen entfallen. Ganz besonders bevorzugt wird ein Verhältnis von NCO-Gruppen zu Isocyanat-reaktiven Gruppen von mindestens 1,0 eingestellt. In einer am meisten bevorzugten Variante wird mit einem Überschuss von NCO-Gruppen gearbeitet entsprechend einem Verhältnis von NCO-Gruppen zu Isocyanat-reaktiven Gruppen von 1,05 bis 1,50.

Gegenstand der vorliegenden Erfindung ist auch ein Verfahren zur Herstellung eines Beschichtungsmittels (BM) durch Mischen einer ersten Komponente (I), enthaltend oder bestehend aus
(A) mindestens eine/r Polyisocyanatkomponente gemäß vorstehender Beschreibung
(B) mindestens ein/em Alkoxysilyl-funktionelles/en Siloxan (II) gemäß vorstehender Beschreibung
   mit einer zweiten Komponente (II), enthaltend oder bestehend aus
(C) mindestens eine/r Hydroxylgruppen-haltige/n Verbindung,
wobei in wenigstens einer der beiden Komponenten I und II mindestens ein Katalysator für die

Vernetzung von Silangruppen (D) enthalten ist.

Ein weiterer Gegenstand der vorliegenden Erfindung ist ein Beschichtungsmittel (BM), erhältlich nach dem zuvor beschriebenen Verfahren.

### Verwendung der erfindungsgemäßen Beschichtungsmittel (BM)

Als Untergründe für die mit den erfindungsgemäßen Beschichtungsmitteln (BM) zu beschichtenden Substrate eignen sich beliebige Substrate, wie z.B. Metall, Holz, Glas, Stein, keramische Materialien, Beton, harte und flexible Kunststoffe, Textilien, Leder und Papier sowie Verbundmaterialien, die vor der Beschichtung auch bevorzugt mit einer oder mehreren Schichten wie üblichen Grundierungen und/oder Basislackschichten versehen werden. In einer bevorzugten Ausführungsform werden die erfindungsgemäßen Beschichtungsmittel (BM) zur Beschichtung von harten und flexiblen Kunststoffen verwendet, im Besonderen für Kunststoffe im Bereich der Automobilindustrie. Die erfindungsgemäßen Beschichtungsmittel (BM) werden bevorzugt als Klarlack oder Decklack eingesetzt. Besonders bevorzugt sind solche Substrate, für die Anforderungen wie geringes Anschmutzverhalten und/oder einfache Reinigung im Falle von Anschmutzung bestehen.

Geeignete Methoden zum Aufbringen der erfindungsgemäßen Beschichtungsmittel (BM) auf das Substrat sind beispielsweise Drucken, Streichen, Rollen, Gießen, Tauchen, Fluten und/oder bevorzugt Spritzen wie beispielsweise Druckluftspritzen, Airless-Spritzen, Hochrotation, elektrostatischer Sprühauftrag (ESTA), gegebenenfalls verbunden mit Heißspritzapplikation wie zum Beispiel Hot-Air-Heißspritzen.

Geeignete Schichtdicken richten sich nach dem Applikationsverfahren und betragen als Trockenschichtdicke betrachtet üblicherweise zwischen 5 und 60 µm, bevorzugt zwischen 10 und 40 µm, insbesondere zwischen 12 und 30 µm.

Im Anschluss an das Aufbringen der erfindungsgemäßen Beschichtungsmittel (BM) werden zunächst flüchtige Substanzen wie organische Lösemittel mit in der Lackiertechnik üblichen Methoden entfernt. Bevorzugt erfolgt das Entfernen durch Trocknen bei erhöhten Temperaturen, z.B. in einem Bereich von 40 bis 250 °C, bevorzugt von 40 bis 100 °C in Öfen und mit bewegter Luft (Konvektionsöfen, Düsentrockner) sowie Wärmestrahlung (IR, NIR). Weiterhin können Mikrowellen zum Einsatz kommen. Es ist möglich, mehrere dieser Trocknungsverfahren zu kombinieren.

Vorteilhafterweise werden die Bedingungen für die Trocknung so gewählt, dass die maximal erreichte Temperatur unter der Grenze bleibt, bei der sich das Substrat verformt oder sonstige Schäden erleidet.

Gegenstand der Erfindung sind daher auch die Verwendung der erfindungsgemäßen Beschichtungsmittel (BM) zur Herstellung von Beschichtungen auf Substraten.

Ein weiterer Gegenstand ist ein Verfahren zur Herstellung einer Beschichtung auf einem Substrat, umfassend
- das Aufbringen eines gemäß vorstehend beschriebenem Verfahren erhaltenen Beschichtungsmittels (BM) auf ein Substrat,
- die thermische Härtung des Beschichtungsmittels (BM).

Darüberhinaus sind die beschichteten Substrate selbst ein Gegenstand der vorliegenden Erfindung.

### Beispiele

Alle Prozentangaben beziehen sich, soweit nichts Anderslautendes vermerkt, auf das Gewicht.

Zur Herstellung der lösemittelhaltigen Klarlacke wurden die Polyole Desmophen 670 BA (Covestro Deutschland AG, Leverkusen, DE) und Setalux D A 365 BA/X (Allnex Germany GmbH, Bitterfeld-Wolfen, DE) mit einem handelsüblichen Verlaufsadditiv (Baysilone Lackadditive OL 17, OMG AG + Co. KG, Langenfeld, DE) sowie dem handelsüblichen Katalysator Nacure 4000 (King Industries, Norwalk, US, als Katalysator C) sowie zur Einstellung der Viskosität die Lösungsmittel Methoxypropylacetat, Solvent Naphta 100 und Diacetonalkohol durch intensives Rühren bei Raumtemperatur homogen vermischt.

Zur Herstellung der Härterkomponente I wurde das Polyisocyanat mit dem Additive KR-410 bzw. KF-6000 homogen vermischt und für 72 Stunden bei Raumtemperatur gelagert.

Tabelle 1 zeigt die Zusammensetzungen der Formulierung.

Zur Herstellung eines Klarlacks wurden die oben beschriebenen Mischungen homogen miteinander vermischt und mit einem 50 µm Rakel auf eine mit Isopropylalkohol gereinigte Glasplatte aufgezogen. Nach Filmaufzug wurde für 10 Minuten bei Raumtemperatur, anschließend für 30 Minuten bei 80°C und für 16 Stunden bei 60°C getrocknet.

Die Bestimmung der Pendeldämpfung nach König erfolgte nach DIN EN ISO 1522:2007.

Zur Bestimmung der Easy-to-Clean Eigenschaften mittels sogenanntem Markertest wurde mit einem handelsüblichen grünen Edding 3000 permanent Marker (Firma Edding, Ahrensburg, Deutschland) ein breiter Strich auf die Beschichtung aufgetragen, welcher nach 10 s mit einem staubfreien Tuch soweit wie möglich abgewischt wurde. Die Intensität des Rückstands wurde visuell beurteilt (++ = kein erkennbarer Rückstand, + = deutlicher Rückstand, - = kompletter Strich noch vorhanden). Außerdem wurde das Auftragsverhalten bewertet (O = gut auftragbar, O/Z = Markierung zieht sich leicht zusammen, Z = Markierung zieht deutlich sich zusammen).

Tabelle 2 zeigt die Ergebnisse der anwendungstechnischen Prüfungen im Vergleich.

### Verwendete Ausgangsverbindungen

### Desmophen 670 BA

Schwach verzweigter, hydroxlgruppenhaltiger Polyester, ca. 80% in Butylacetat, ca. 3,5% Hydroxylgehalt, Viskosität bei 23°C ca 3000 mPas.

### Desmodur 2873

Silan-funktionelles aliphatisches Polyisocyanat auf Basis von HDI (Covestro Deutschland AG, Leverkusen, 100% Lieferform, NCO-Gehalt: 12,3%, Viskosität bei 23°C: ca 450 mPas.

### Setalux D A 365 BA/X

Polyacrylatpolyol (Allnex Germany GmbH, Bitterfeld-Wolfen, DE), 65 %ige Lösung in Butylacetat / Xylol (75 : 25), ca 2,7 % Hydroxylgehalt (bezogen auf Lieferform), Viskosität bei 23°C: ca. 3000 mPas.

### Nacure 4000

Alkylsäurephosphatkatalysator (King Industries, Norwalk, US), Säurezahl ca 650 mg KOH/g, Verwendung als 10%ige Lösung der Lieferform in MPA.

### KR-410

lineares alkoxysilylfunktionelles Siloxan (Shin-Etsu, Japan), Lieferform.

### KF-6000:

lineares hydroxyfunktionelles Siloxan (Shin-Etsu, Japan), Lieferform.

**Tabelle 1: Klarlackformulierung. Alle Angaben in g wenn nicht anders angegeben.**

| **Beispiel** | **1** | **2 (Vgl)** |
|---|---|---|
| **Komponente I** | | |
| DESMOPHEN 670 BA | 18,80 | 18,80 |
| Setalux D A 365 BA/X | 130,80 | 130,80 |
| Baysilone Lackadditive OL 17 | 1,80 | 1,80 |
| Methoxypropoylacetat | 36,10 | 36,10 |
| Solventnaphtha100 | 36,10 | 36,10 |
| Diacetonalkohol | 18,10 | 18,10 |
| Nacure 4000 | 1,90 | 1,90 |

| **Komponente II** | | |
|---|---|---|
| Desmodur 2873 | 93,20 | 93,20 |
| KR-410 | 1,70 | |
| KF-6000 | | 1,70 |

**Tabelle 2: Übersicht über die Prüfergebnisse.**

| **Beispiel** | **1** | **2 (Vgl)** |
|---|---|---|
| Pendeldämpfung nach König [s] Nach 24 h | 195 | 188 |
| Pendeldämpfung nach König [s] Nach 1 Woche | 202 | 203 |
| Markertest - Rückstand | + | + |
| Markertest - Auftragsverhalten | O/Z | Z |

Wie in Tabelle 2 zu sehen ist, ist es möglich, mit einem silanfunktionales Additiv in der Härterkomponente Klacklacke mit hoher Härte und guten Easy-to-Clean Eigenschaften herzustellen. Die mit dem grünen Edding gemachte Markierung lässt sich im Falle des erfindungsgemäßen Beispiels 1 ebenso gut entfernen wie im Falle des Vergleichbeispiels 2. Die erfindungsgemäßen Formulierungen stellen somit eine gleichwertige Alternative gegenüber Formulierungen der Art des Beispiels 2 dar.

## Patentansprüche

1. Zwei-komponentiges Beschichtungsmittel aus einer ersten Komponente (I), enthaltend oder bestehend aus
(A) mindestens eine/r Polyisocyanatkomponente, erhältlich durch Umsetzung
(A1) mindestens eines Polyisocyanats mit
(A2) mindestens einer gegenüber Isocyanatgruppen reaktiven Verbindung der allgemeinen Formel (I) 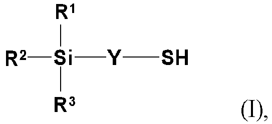 in welcher
R¹, R² und R³ für gleiche oder verschiedene Reste stehen und jeweils einen gesättigten oder ungesättigten, linearen oder verzweigten, aliphatischen oder cycloaliphatischen oder einen gegebenenfalls substituierten aromatischen oder araliphatischen Rest mit bis zu 18 Kohlenstoffatomen bedeuten, der gegebenenfalls bis zu 3 Heteroatome aus der Reihe Sauerstoff, Schwefel, Stickstoff enthalten kann,
und Y für einen linearen oder verzweigten organischen Rest mit mindestens 2 Kohlenstoffatomen steht,
(B) mindestens ein/em Alkoxysilyl-funktionelles/en Siloxan der Formel (II)
R⁴-SiR⁵₂-Aₓ-B_{y}-O-SiR⁶₂-R⁷ (II),
worin A eine Gruppe -[O-SiR⁸₂]- und B eine Gruppe -[O-SiR⁹R¹⁰]- ist,
R⁵, R⁶, R⁸ und R⁹ unabhängig voneinander lineare oder verzweigte Alkylgruppen mit 1 bis 4 Kohlenstoffatomen sind,
R⁴, R⁷ und R¹⁰ unabhängig voneinander eine Gruppe -L-R¹¹ sind, worin
L = eine lineare oder verzweigte 2-bindige Alkylgruppe und
R¹¹ = H oder -Si(R¹²)_{z}(OR¹³)_{3-z} mit R¹², R¹³ = eine lineare oder verzweigte Alkylgruppe mit 1 bis 4 Kohlenstoffatomen und z = 0, 1, oder 2, bevorzugt z = 0,
mit der Vorgabe, das mindestens einer der Reste R⁴ oder R⁷ und/oder mindestens eine Gruppe B eine Gruppe R¹¹ = -Si(R¹²)_{z}(OR¹³)_{3-z} beinhaltet,
x unabhängig für eine ganze Zahl von 1 -20 steht, und
y unabhängig für eine ganze Zahl von 0-10 steht,
wobei bevorzugt x+y ≤ 20 ist,
und einer zweiten Komponente (II), enthaltend oder bestehend aus
(C) mindestens eine/r Hydroxylgruppen-haltige/n Verbindung,
wobei in wenigstens einer der beiden Komponenten I und II mindestens ein Katalysator für die Vernetzung von Silangruppen (D) enthalten ist.

2. Zwei-komponentiges Beschichtungsmittel gemäß Anspruch 1, wobei das mindestens eine Polyisocyanat A1 ausgewählt ist aus der Gruppe bestehend aus monomeren Diisocyanaten mit aliphatisch, cycloaliphatisch, araliphatisch und/oder aromatisch gebundenen Isocyanatgruppen und durch Modifizierung von monomeren aliphatischen, cycloaliphatischen, araliphatischen und/oder aromatischen Diisocyanaten erhältlichen oligomeren Di- oder Polyisocyanaten mit Uretdion-, Isocyanurat-, Urethan-, Allophanat-, Thiourethan-, Thioallophanat-, Biuret-, Harnstoff-, Iminooxadiazindion- und/oder Oxadiazintrionstruktur.

3. Zwei-komponentiges Beschichtungsmittel gemäß Anspruch 1 oder 2, wobei das mindestens eine Polyisocyanat A1 ausgewählt ist aus der Gruppe bestehend HDI , PDI und oligomeren Di- oder Polyisocyanaten auf HDI- oder PDI-Basis.

4. Zwei-komponentiges Beschichtungsmittel gemäß einem der Ansprüche 1 bis 3, **dadurch gekennzeichnet, dass** die mindestens eine/r Polyisocyanatkomponente A auf einer mindestens einer gegenüber Isocyanatgruppen reaktiven Verbindung der allgemeinen Formel I (A2) basiert, in welcher
R¹, R² und R³ für gleiche oder verschiedene Reste stehen und jeweils einen gesättigten, linearen oder verzweigten, aliphatischen oder cycloaliphatischen Rest mit bis zu 6 Kohlenstoffatomen bedeuten, der gegebenenfalls bis zu 3 Sauerstoffatome enthalten kann, und
Y für einen linearen oder verzweigten Alkylenrest mit 2 bis 10 Kohlenstoffatomen steht.

5. Zwei-komponentiges Beschichtungsmittel gemäß Anspruch 4, **dadurch gekennzeichnet, dass** die mindestens eine/r Polyisocyanatkomponente A auf einer mindestens einer gegenüber Isocyanatgruppen reaktiven Verbindung der allgemeinen Formel (I) basiert, in welcher R¹, R² und R³ jeweils Alkylreste mit bis zu 6 Kohlenstoffatomen und/oder Alkoxyreste, die bis zu 3 Sauerstoffatomen enthalten, bedeuten, mit der Maßgabe, dass mindestens einer der Reste R¹, R² und R³ für einen solchen Alkoxyrest, bevorzugt für einen Methoxy- oder Ethoxyrest steht, und Y für einen Propylenrest (-CH₂-CH₂-CH₂-) steht.

6. Zwei-komponentiges Beschichtungsmittel gemäß einem der Ansprüche 1 bis 5, **dadurch gekennzeichnet, dass** zur Herstellung der Polyisocyanatkomponente A das mindestens eine Polyisocyanate A1 mit der mindestens einen Isocyanat-reaktiven Verbindungen A2 bei Temperaturen von 20 bis 200 °C, vorzugsweise 30 bis 160 °C umgesetzt unter Einhaltung eines Äquivalentverhältnisses von Isocyanatgruppen zu gegenüber Isocyanaten reaktiven Gruppen von 50 : 1 bis 1,05 : 1, vorzugsweise von 30 : 1 bis 1,25 : 1, besonders bevorzugt 20 : 1 bis 1,5 : 1 umgesetzt wird.

7. Zwei-komponentiges Beschichtungsmittel gemäß einem der Ansprüche 1 bis 6, **dadurch gekennzeichnet, dass** die mindestens eine Polyisocyanatkomponente A Thioallophanatstrukturen aufweist.

8. Zwei-komponentiges Beschichtungsmittel gemäß einem der Ansprüche 1 bis 9, **dadurch gekennzeichnet, dass** Komponente I mindestens ein Alkoxysilyl-funktionelles Siloxan B der Formel (II) enthält, wobei
R⁵, R⁶ und R⁸ unabhängig voneinander für Methyl und/oder Ethyl, bevorzugt für Methyl stehen,
R⁴ und R⁷ unabhängig voneinander für eine Gruppe -L-R¹¹ stehen, worin
L= eine lineare oder verzweigte 2-bindige Alkylgruppe, bevorzugt Ethylen, und
R¹¹= -Si(R¹²)_{z}(OR¹³)_{3-z}, mit R¹², R¹³= eine lineare oder verzweigte Alkylgruppe mit 1 bis 4 Kohlenstoffatomen und z = 0, 1, oder 2, bevorzugt z= 0, und y= 0.

9. Zwei-komponentiges Beschichtungsmittel gemäß einem der Ansprüche 1 bis 8, **dadurch gekennzeichnet, dass** die mindestens eine/r Hydroxylgruppen-haltige/n Verbindung C ausgewählt ist aus der Gruppe bestehend aus Polyesterpolyolen, Polyetherpolyolen, Polycarbonatpolyolen und Polyacrylatpolyolen.

10. Zwei-komponentiges Beschichtungsmittel gemäß einem der Ansprüche 1 bis 9, **dadurch gekennzeichnet, dass** der mindestens ein Katalysator für die Vernetzung von Silangruppen D ausgewählt ist aus der Gruppe bestehend aus sauren Phosphorsäureestern, Phosphonsäureestern und Sulfonsäuren, die gegebenenfalls in mit Aminen blockierter Form vorliegen können, und Tetraalkylammoniumcarboxylaten.

11. Zwei-komponentiges Beschichtungsmittel gemäß einem der Ansprüche 1 bis 10, **dadurch gekennzeichnet, dass** die Reaktionspartner in solchen Mengen vorliegen, dass auf jede Isocyanatgruppe 0,5 bis 3, vorzugsweise 0,6 bis 2,0, besonders bevorzugt 0,8 bis 1,6 gegenüber Isocyanaten reaktive Gruppen entfallen.

12. Verfahren zur Herstellung einer Beschichtung auf einem Substrat, umfassend
- das Aufbringen eines durch Mischen der beiden Komponenten I und II eines zwei-komponentigen Beschichtungsmittels gemäß einem der Ansprüche 1 bis 11 erhältlichen Beschichtungsmittels (BM) auf ein Substrat,
- die thermische Härtung des aufgebrachten Beschichtungsmittels (BM).

13. Verfahren gemäß Anspruch 12, wobei es sich bei den Beschichtungen um Klarlacke oder Decklacke handelt.

14. Verfahren gemäß Anspruch 12 oder 13, wobei es sich bei den Substraten um harte oder flexible Kunststoffe handelt, insbesondere um Kunststoffe für die Verwendung im Bereich der Automobilindustrie.

15. Beschichtete Substrate erhältlich nach einem Verfahren gemäß einem der Ansprüche 12 bis 14.
